Europäisches Patentamt

European Patent Office

Office européen des brevets

(11) Veröffentlichungsnummer: **0 221 369**
**A2**

(12) # EUROPÄISCHE PATENTANMELDUNG

(21) Anmeldenummer: **86113767.7**

(22) Anmeldetag: **04.10.86**

(51) Int. Cl.⁴: **A 23 G 3/02**
**A 23 G 3/28, A 23 G 9/28**

(30) Priorität: **30.10.85 DE 3538534**

(43) Veröffentlichungstag der Anmeldung:
**13.05.87 Patentblatt 87/20**

(84) Benannte Vertragsstaaten:
**AT BE CH DE ES FR GB GR IT LI LU NL SE**

(71) Anmelder: **Hämmerle, Martin**
**Am Bühlacker 22**
**D-7807 Elzach-Prechtal(DE)**

(72) Erfinder: **Hämmerle, Martin**
**Am Bühlacker 22**
**D-7807 Elzach-Prechtal(DE)**

(74) Vertreter: **Patentanwälte Dipl.-Ing. Hans Schmitt**
**Dipl.-Ing. Wolfgang Maucher**
**Dreikönigstrasse 13**
**D-7800 Freiburg i.Br.(DE)**

(54) **Dosiergerät.**

(57) Ein Dosiergerät (1) dient zum Abfüllen von Flüssigkeiten, Pasten, Creme und dergleichen, insbesondere in Konditoreien. Das Gerät (1) hat einen bevorzugt als Trichter ausgebildeten Vorratsbehälter (2) und einen mit einer Austrittsmündung (9) für das abzufüllende Medium versehenen Durchtrittskanal (8). Ferner ist ein Dosierzylinder (3) mit Kolben (4) und eine Betätigungsvorrichtung (7) vorgesehen. Der Dosierzylinder (3) ist dabei gleichzeitig wenigstens ein Teil des Durchtrittskanales (8) und der Dosierzylinder (3) mit seinem Kolben (4) und einem Auslaßventil (6) sind koaxial zueinander und zu dem Durchtrittskanal (8) in diesem angeordnet, so daß der Ausfluß des abzufüllenden Mediums aus dem Vorratsbehälter (2) zu der Austrittsmündung (9) auf direktem Wege erfolgt und die Einzelteile vor allem für eine Reinigung gut zugänglich und gut demontierbar sind.

EP 0 221 369 A2

Fig.1

DIPL.-ING. W. MAUCHER

TELEFON: (0761) 70773
70779

MR/Gb 0221369

UNSERE AKTE · BITTE STETS ANGEBEN:

E 86 258 MR

Herr
Martin Hämmerle
Am Bühlacker 22
7807 Elzach-Prechtal

## Dosiergerät

Die Erfindung betrifft ein Dosiergerät zum Abfüllen von Flüssigkeit, Paste, Creme und dgl., insbesondere für Konditoreien, mit einem z. B. durch einen Trichter gebildeten Vorratsbehältnis, einem Dosierzylinder mit Kolben, einem in einem vom Vorratsbehältnis zur Mündung führenden Durchtrittskanal angeordneten Auslaßventil sowie mit einer Betätigungsvorrichtung.

Es ist bereits ein Dosiergerät bekannt, bei dem im Verlauf des Durchtrittskanales seitlich ein Dosierzylinder mit Kolben angeordnet ist, der in der Nachfüllphase über ein Ventil Füllmasse aus einem Vorratsbehältnis ansaugt. In der Ausschubphase ist dann das Ventil umgeschaltet, so daß die angesaugte Füllmasse vom Dosierzylinder zum Ausgabeende gefördert wird. Dieses Dosiergerät ist jedoch in nachteiliger Weise kompliziert im Aufbau, wodurch insbesondere auch eine gründliche Reinigungsmöglichkeit erschwert ist. Außerdem ist die Handhabung umständlich.

Aufgabe der vorliegenden Erfindung ist es, ein Dosiergerät der eingangs erwähnten Art zu schaffen, das einfach im Aufbau ist, für Reinigungszwecke und dgl. schnell und einfach demontierbar ist, und bei dem nach der Demontage praktisch alle Einzelteile für die Reinigung gut zugänglich sind und bei dem darüber hinaus die Handhabung wesentlich verbessert ist.

Zur Lösung dieser Aufgabe wird erfindungsgemäß insbesondere vorgeschlagen, daß der Dosierzylinder gleichzeitig wenigstens ein Teil des Durchtrittskanales ist und daß zumindest der Dosierzylinder mit Kolben und das Auslaßventil koaxial zueinander und zum Durchtrittskanal in diesem angeordnet sind.

Durch diese Ausbildung ist insbesondere auch ein günstiger Durchfluß ohne Umlenkungen vorhanden und durch die koaxiale Anordnung kann auch eine besonders einfache Demontage der gesamten Einbauteile erfolgen. Anschließend sind die Einzelteile zur Reinigung gut zugänglich.

Eine Ausgestaltung der Erfindung sieht vor, daß der Kolben ein von der Kolbenstange betätigtes Nachfüllventil aufweist, welches in der Ausschubphase geschlossen und in der Nachfüllphase offen ist und daß am Ausgabeende der Dosierkammer bzw. des Durchtrittskanales das Auslaßventil angeordnet ist, welches in der Nachfüllphase geschlossen ist. Durch die wechselweise Steuerung der beiden Ventile wird auch bei etwas zähflüssigerem oder pastösem Füllmedium eine sichere Funktion erzielt.

Zweckmäßigerweise weist der Kolben eine vorzugsweise über Stege mit ihm verbundene Führung für die Kolbenstange auf, wobei der Kolben um den Öffnungsweg des Nachfüllventiles verschiebbar und der Ventildeckel fest mit der Kolbenstange verbunden sind. Somit erfolgt eine direkte Betätigung des Nachfüllventiles über die Kolbenstange, so daß auch ohne sich im Dosierzylinder aufbauenden Unterdruck ein Öffnen des Nachfüllventiles erfolgt.

Zweckmäßigerweise weist der Kolben wenigstens einen Dichtungsring auf, der schwimmend in einer Kolbennut gelagert ist, und daß die Kolbenwand, ausgehend von der Kolbennut, jeweils schräg nach innen weisend ausgebildet ist. Durch diese Ausgestaltung wird eine gute

**0221369**

Abdichtung erzielt, die auch noch dann beibehalten wird, wenn der Kolben bei der Betätigung kleinere Kippbewegungen ausführt.

Eine Weiterbildung sieht vor, daß die Betätigungseinrichtung insbesondere über dem Vorratsbehältnis angeordnet ist und eine Halterung zum Befestigen vorzugsweise am Rand des Vorratsbehältnisses und zur Führung der Kolbenstange sowie einen mit dieser verbundenen Betätigungsgriff aufweist. Durch diese Anordnung ist eine besonders einfache Handhabung und weitgehend ermüdungsfreies Betätigen des Dosiergerätes möglich.

Vorteilhafterweise weist die Rückstelleinrichtung einen Stützhalter, insbesondere mit einem Durchtritt für die Kolbenstange sowie auf der dem Kolben abgewandten Seite des Stützhalters eine Rückstellfeder auf, die sich andererseits an einem mit der Kolbenstange vorzugsweise höhenverstellbar verbundenen Widerlager abstützt. Nach der Ausschubphase durch Niederdrücken des Betätigungsgriffes erfolgt durch die Rückstelleinrichtung ein selbsttätiges Rückführen des Kolbens in seine Ausgangslage, wobei die Ausgangslage durch das verstellbare Widerlager eingestellt und somit die Dosiermenge verändert werden kann.

Zusätzliche Ausgestaltungen der Erfindung sind in den weiteren Unteransprüchen aufgeführt. Nachstehend ist die Erfindung mit ihren wesentlichen Einzelheiten anhand eines Auführungsbeispieles näher beschrieben.

Es zeigt:

Fig. 1     eine Längsschnittdarstellung eines Dosiergerätes und /4

Fig. 2    eine Schnittdarstellung des Kolbens mit
          Nachfüllventil.

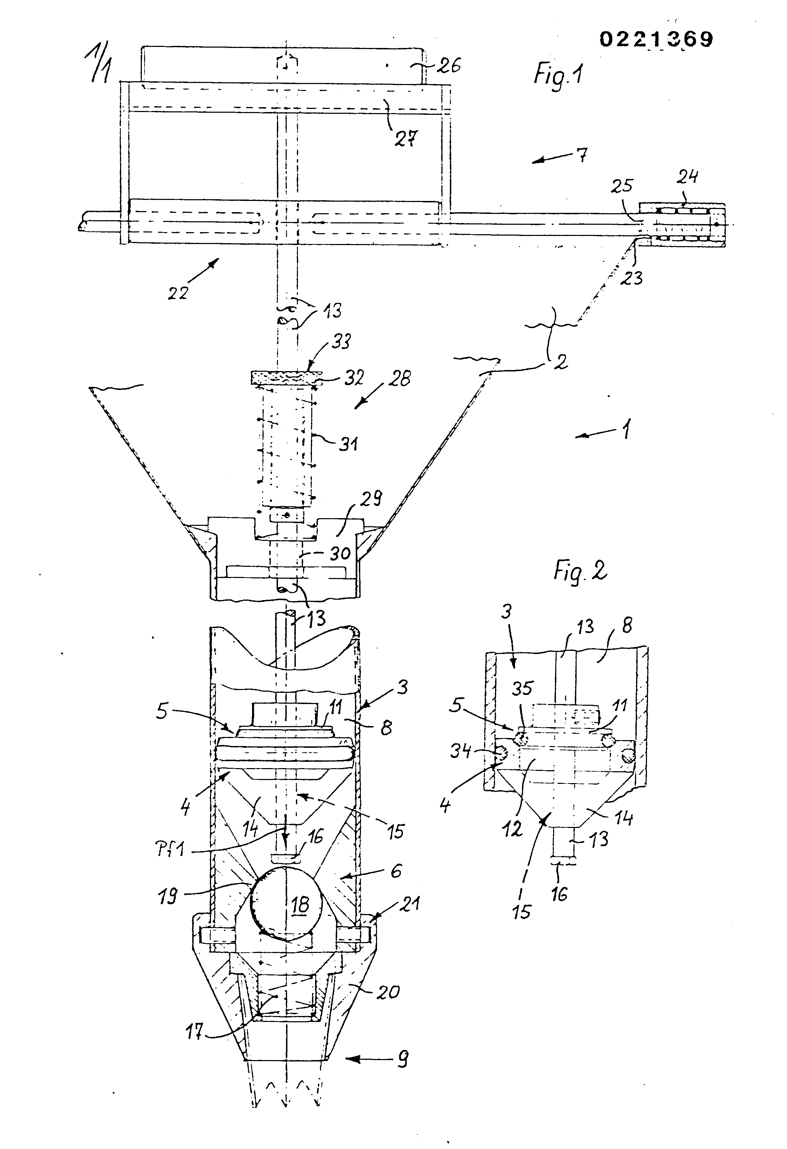

Ein in Fig. 1 gezeigtes Dosiergerät 1 ist aus Platzgründen etwas verkürzt in Teilabschnitten dargestellt. Es besteht im wesentlichen aus einem hier als Trichter ausgebildeten Vorratsbehälter 2, einem Dosierzylinder 3 mit Kolben 4, einem Nachfüllventil 5, einem Auslaßventil 6 sowie einer Betätigungsvorrichtung 7, mittels der der Kolben 4 bewegt werden kann. Der Dosierzylinder 3 bildet hier auch gleichzeitig einen Durchtrittskanal 8 vom Vorratsbehälter 2 zur Austrittsmündung 9.

Das Dosiergerät 1 kann beispielsweise in Konditoreien zum Füllen von Trüffelhohlkugeln mit einer Füllmasse dienen. Durch das Dosiergerät 1 kann die jeweilige Füllmenge genau dosiert vorgegeben werden, so daß beim Füllen der Trüffelhohlkugeln nur noch darauf geachtet werden muß, daß die Austrittsmündung 9 und die Einfüllöffnung der Trüffelhohlkugel etwa übereinander liegen. Die Füllhöhe selbst, durch die auch die Qualität des Produktes bestimmt wird, braucht dabei nicht beobachtet zu werden. Somit ist die Handhabung wesentlich vereinfacht und es wird dadurch auch ein gleichbleibendes, gutes Ergebnis beim dosierten Befüllen von z.B. Trüffelkugeln, Pralinen od.dgl. erzielt. Das Dosiergerät 1 eignet sich auch für Pasten, Cremes und dgl.

Durch die erfindungsgemäße, koaxiale Anordnung des Dosierzylinders 3 mit Kolben 4 und Auslaßventil 6 innerhalb des Durchtrittskanales 8, ergibt sich ein besonders einfacher Aufbau des Gerätes und darüber hinaus ist auch die Montage und Demontage, die zu Reinigungszwecken öfters vorgenommen werden muß, leicht durchführbar.

Der Kolben 4 weist, wie auch in Fig. 2 erkennbar, ein Nachfüllventil 5 auf, durch das beim Zurückziehen des Kolbens 4 Füllmasse vom Vorratsbehälter 2 in den Dosierzylinder 3 auf der anderen Seite des Kolbens gelangen kann. Das Nachfüllventil 5 hat einen Ventildeckel 11, der in Schließstellung eine im Kolben 4 vorgesehene Durchtrittsöffnung 12 verschließt. Der Ventildeckel 11 ist fest mit einer Kolbenstange 13 verbunden, die in einer mit dem Kolben über Stege 14 verbundene Führung 15 verschiebbar gelagert ist.

Die Stege 14 mit der Führung 15 können auch an der Oberseite des Kolbens 4 angeordnet sein. Dadurch erhält man unter anderem noch günstigere Platzverhältnisse. Der Kolben 4 ist ringförmig ausgebildet und weist zentral die Durchtrittsöffnung 12 auf.

Die Kolbenstange 13, der Ventildeckel 11 und der Kolben 4 sind koaxial zueinander angeordnet. Am unteren Ende der Kolbenstange 13 befindet sich ein Anschlag 16, der in Öffnungsstellung des Nachfüllventiles 5 an der Führung 15 anliegt.

Bei einer Ausschubbewegung des Kolbens 5 gemäß dem Pfeil Pf 1 in Fig. 1 wird über die Kolbenstange 13 und den Ventildeckel 11 die Betätigungskraft auf den Kolben 4 übertragen. Das Nachfüllventil 5 befindet sich somit, wie auch in Fig. 1 und 2 gezeigt, in Schließstellung. Beim Zurückziehen der Kolbenstange 13 entgegen der Pfeilrichtung Pf 1 wird der Ventildeckel 11 von der Durchtrittsöffnung 12 des Kolbens 4 abgehoben, da dieser durch die Wandungsreibung und auch unterstützt durch ein im Dosierzylinder 3 sich aufbauendes Vakuum, etwas zurückgehalten wird. In Öffnungsstellung des Nachfüllventiles 5 wird dann auch der Kolben 4 durch den Anschlag 16 mitgenommen.

Am austrittsseitigen Ende des Durchtrittskanales 8

/6

befindet sich das Auslaßventil 6, das hier als Kugelventil ausgebildet ist. Dieses Ventil 6 ist in der Nachfüllphase geschlossen, wie in Fig. 1 dargestellt und beim Ausschieben der Füllmasse geöffnet. Die Öffnungsbewegung erfolgt dabei durch den Druck des Füllmediums, während das Schließen des Auslaßventiles 6 bei geringerem oder ohne Füllmediumdruck, durch eine Feder 17 erfolgt. Diese drückt die Kugel 18 oder dgl. Ventilkörper in Schließstellung an einen im Durchtrittskanal 8 angeordneten, konischen Ventilsitz 19. Das Auslaßventil 6 wird durch einen bei der Austrittsmündung 9 angebrachten Mündungsteil 20 gehalten, der vorzugsweise über einen Bajonettverschluß 21 mit dem Durchtrittskanal 8 bzw. dem Dosierzylinder 3 lösbar verbindbar ist. Das Auslaßventil 6 ist somit insgesamt als leicht auswechselbarer Einsatz ausgebildet. Anstatt eines Kugelventiles für das Auslaßventil 6 kann hier auch ein Tellerventil od.dgl. vorgesehen sein.

Die Betätigungsvorrichtung 7 ist am bzw. oberhalb des Vorratsbehälters 2 angeordnet. Sie weist eine Halterung 22 auf, mittels der eine lösbare Befestigung am Trichterrand 23 möglich ist. Als Befestigungsteil sind jeweils außen an der Halterung 22 Federhülsen 24 vorgesehen, die den Trichterrand 23 in Haltestellung übergreifen, wobei ein mit den Federhülsen 24 verbundener Stift 25 in eine Kerbe des Trichterrandes eingreift. Dadurch ist die Halterung 22 und somit auch die Betätigungsvorrichtung 7 insgesamt gut festgelegt, andererseits aber mit einer einfachen Zugbewegung an den Federhülsen 24 auch leicht entfernbar. Bei der Betätigungsvorrichtung 7 erkennt man noch einen Handgriff 26, der sich in Fig. 1 in seiner untersten Stellung befindet und dabei in eine Mulde eines Gegengriffstückes 27 eingreift. Zum Betätigen des Dosiergerätes 1 wird

/7

der Handgriff 26 zusammen mit dem Gegengriffstück 27 mit einer Hand umfaßt, wobei dann durch Zusammendrücken diese beiden Teile sich zueinander bewegen, wobei die Kolbenstange 13 nach unten bewegt wird.

Etwa im Übergangsbereich zwischen dem Vorratsbehälter 2 und dem Durchtrittskanal 8 erkennt man noch eine Rückstelleinrichtung 28, mittels der ein selbsttätiges Rückstellen des Kolbens 4 in seine Ausgangslage nach einem Arbeitshub erfolgt.

Die Rückstelleinrichtung 28 weist einen Stützhalter 29 mit einem Durchtritt 30 für die Kolbenstange 13 auf, wobei sich an diesem Stützhalter 29 auf der dem Kolben abgewandten Seite eine Rückstellfeder 31 abstützt. Die andere Seite der Rückstellfeder liegt an einem Widerlager 32 an. Dessen Rückseite bildet eine Anschlagfläche 33, die in Obenstellung des Kolbens 4 an der Halterung 22 anliegt. Das Widerlager 32 ist relativ zur Kolbenstange 13 verstellbar, so daß dadurch der wirksame Arbeitshub des Kolbens 4 und damit die Menge der herausgedrückten Masse genau dosiert vorgegeben werden kann.

Zur Demontage des Dosiergerätes 1 genügt es, die beiden Federhülsen 24 nach außen zu ziehen und somit die Verbindung der Halterung 22 vom Vorratsbehälter 2 zu lösen. Anschließend kann mit dem Abnehmen der Betätigungsvorrichtung 7 auch der Kolben 4 mit dem Nachfüllventil 5 sowie die Rückstelleinrichtung 28 nach oben herausgezogen werden. Auch das Kugelventil 6 ist nach dem Abnehmen des Mündungsteiles 20 leicht entfernbar, so daß dann insgesamt auf besonders einfache Weise eine gründliche Reinigung aller Teile des Dosiergerätes 1 möglich ist.

Fig. 1 und insbesondere Fig. 2 lassen gut erkennen, daß der Kolben 4 einen Dichtungsring 34 hat und daß auch der Ventildeckel 11 des Nachfüllventiles 5 mit einem Dichtungsring 35 versehen ist. Die Dichtungsringe sind in Aufnahmenuten gelagert. Bei dem Kolben-Dichtungsring 34 ist eine schwimmende Lagerung vorgesehen, so daß auch Kippbewegungen des Kolbens nicht zum Verkanten und zu einer Schwergängigkeit des Kolbens führen. Dies wird auch dadurch begünstigt, daß die Kolbenaußenwand, jeweils ausgehend von den Nutenrändern, schräg nach innen weisend verlaufen. Anstatt von geraden Schrägflächen könnte hier auch eine insgesamt etwas ballige Ausführung der Kolbenaußenwand vorgesehen sein. Insgesamt wird dadurch eine Funktionsbeeinträchtigung durch einen Seitenversatz der Kolbenstange während der Betätigung vermieden.

Erwähnt sei noch, daß anstatt des hier vorgesehenen Kugelventiles für das Auslaßventil 6, das druckabhängig öffnet, insbesondere bei zähflüssigeren Massen auch ein Schieber vorgesehen sein kann. Auch die Betätigungsvorrichtung 7 kann seitlich des Vorratsbehälters 2 befindliche Halter bzw. Handgriffe haben, durch die ein Betätigen des Dosiergerätes in anderer Haltelage, je nach den Erfordernissen möglich ist. Der Trichter 2 kann gegebenenfalls mit dem den Durchtrittskanal bildenden Dosierzylinder 3 einstückig ausgebildet sein.

Anstatt eines manuellen Antriebes, wie vorbeschrieben, kann als Betätigungseinrichtung auch ein motorischer Antrieb vorgesehen sein. Insbesondere bei größeren erfindungsgemäßen Dosiergeräten, die auch eine Wandhalterung haben können, ist dieser motorische Antrieb vorteilhaft. Eine bevorzugte Ausführungsform dieses motorischen Antriebes sieht dabei vor, daß zwischen einem Antriebsmotor und der Kolbenstange 13 od. dgl. ein

/9

Getriebe vorgesehen ist, das im wesentlichen einen Kurbelantrieb und eine von diesem angetriebene Schwinge hat. Der Kurbeltrieb wird von dem Antriebsmotor in Drehung versetzt und greift mit seinem Kurbelzapfen in einen Längsschlitz der Schwinge ein. Diese führt somit während einer Umdrehung des Kurbeltriebes eine Hin- und Herbewegung durch, wobei wegen den bei diesen beiden Bewegungen unterschiedlichen Abständen des Kurbelzapfens zur Schwingenlagerung sich eine schnelle Bewegung und eine langsame Bewegung einstellen. An der Schwinge greift ein Abtriebshebel an, der beispielsweise entweder direkt die Kolbenstange 13 sein kann oder der z. B. über einen Winkelhebel die Kolbenstange mit dem Abtriebshebel verbindet. Die langsame Abtriebsbewegung wird als Arbeitshubbewegung genützt, während die schnelle Pendelbewegung der Schwinge den Rückhub bewirkt. Der Abstand der Angriffsstelle des Abtriebshebels an der Schwinge kann relativ zu der Schwingenlagerung verändert werden, so daß sich dementsprechend unterschiedliche Hübe einstellen. Durch Verändern der Antriebsdrehzahl des Antriebsmotors kann die Anzahl der Arbeitshübe pro Zeiteinheit eingestellt werden. Der in den Figuren gezeigte Stützhalter 29 mit seinem Führungsdurchtritt 30 und dgl. ist bei Verwendung eines motorischen Antriebes nicht unbedingt erforderlich.

Alle in der Beschreibung, den Ansprüchen und der Zeichnung dargestellten Merkmale können sowohl einzeln als auch in beliebiger Kombination miteinander erfindungswesentlich sein.

- Ansprüche -

DIPL.-ING. W. MAUCHER

TELEFON: (0761) 70273
70274

Herr
Martin Hämmerle
Am Bühlacker ?2
7807 Elzach-Prechtal

MR022369

UNSERE AKTE · BITTE STETS ANGEBEN:

E 86 258 MR

A n s p r ü c h e

1. Dosiergerät zum Abfüllen von Flüssigkeit, Paste, Creme und dgl., insbesondere für Konditoreien, mit einem z.B. durch einen Trichter gebildeten Vorratsbehältnis, einem Dosierzylinder mit Kolben, einem in einem vom Vorratsbehältnis zur Mündung führenden Durchtrittskanal angeordneten Auslaßventil, sowie mit einer Betätigungsvorrichtung, d a d u r c h g e k e n n z e i c h n e t , daß der Dosierzylinder (3) gleichzeitig wenigstens ein Teil des Durchtrittskanales (8) ist und daß zumindest der Dosierzylinder (3) mit Kolben (4) und das Auslaßventil (6) koaxial zueinander und zum Durchtrittskanal (8) in diesem angeordnet sind.

2. Dosiergerät nach Anspruch 1, dadurch gekennzeichnet, daß der Kolben (4) ein von der Kolbenstange (13) betätigtes Nachfüllventil (5) aufweist, welches in der Ausschubphase geschlossen und in der Nachfüllphase offen ist, und daß am Ausgabeende (9) der Dosierkammer (3) bzw. des Durchtrittskanales (8) das Auslaßventil (6) angeordnet ist, welches in der Nachfüllphase geschlossen ist.

/11

3. Dosiergerät nach Anspruch 1 oder 2, dadurch gekennzeichnet, daß das Auslaßventil (6) als Kugelventil mit einer entgegen der Ausschubrichtung federbeaufschlagten Kugel (18) od.dgl. Ventilkörper ausgebildet ist, der in Schließstellung an einem im Durchtrittskanal angeordneten Ventilsitz (19) anliegt.

4. Dosiergerät nach einem der Ansprüche 1 bis 3, dadurch gekennzeichnet, daß das Auslaßventil (6) insgesamt als leicht auswechselbarer Einsatz ausgebildet ist und vorzugsweise durch ein insbesondere mit einem Bajonettverschluß (21) od.dgl. mit dem Durchtrittskanal (8) verbindbares Mündungsteil (20) gehalten ist.

5. Dosiergerät nach einem der Ansprüche 1 bis 4, dadurch gekennzeichnet, daß der Kolben (4) ringförmig mit einer Durchtrittsöffnung (12) ausgebildet ist, welche im wesentlichen zusammen mit einem Ventildeckel (11) das Nachfüllventil (5) bildet.

6. Dosiergerät nach Anspruch 5, dadurch gekennzeichnet, daß der Kolben (4) eine vorzugsweise über Stege (14) mit ihm verbundene Führung (15) für die Kolbenstange (13) aufweist und daß der Kolben (4) um den Öffnungsweg des Nachfüllventiles (5) verschiebbar und der Ventildeckel (11) fest mit der Kolbenstange (13) verbunden ist.

7. Dosiergerät nach einem der Ansprüche 1 bis 6, dadurch gekennzeichnet, daß der Kolben (4) wenigstens einen Dichtungsring (34) aufweist, der schwimmend in einer Kolbennut gelagert ist und daß die Kolbenaußenwand, ausgehend von der Kolbennut, jeweils schräg nach innen weisend oder ballig ausgebildet ist.

/ 12

8. Dosiergerät nach einem der Ansprüche 1 bis 7, dadurch gekennzeichnet, daß die Betätigungseinrichtung (7) insbesondere über dem Vorratsbehältnis angeordnet ist und eine Halterung (22) zum Befestigen vorzugsweise am Rand (23) des Vorratsbehältnisses sowie einen mit der Kolbenstange (13) verbundenen Betätigungsgriff (26) aufweist.

9. Dosiergerät nach einem der Ansprüche 1 bis 8, dadurch gekennzeichnet, daß vorzugsweise im Übergangsbereich von Vorratsbehälter (2) und Durchtrittskanal (8) eine vorzugsweise an der Kolbenstange (13) angreifende Rückstelleinrichtung (28) für den Kolben (4) vorgesehen ist.

10. Dosiergerät nach Anspruch 9, dadurch gekennzeichnet, daß die Rückstelleinrichtung (28) einen Stützhalter (29) insbesondere mit einem Durchtritt (30) für die Kolbenstange (13) sowie auf der dem Kolben (4) abgewandten Seite des Stützhalters (29) eine Rückstellfeder (31) aufweist, die sich andererseits an einem mit der Kolbenstange (13) vorzugsweise höhenverstellbar verbundenen Widerlager (32) abstützt.

11. Dosiergerät nach einem der Ansprüche 1 bis 7 oder 9 und 10, dadurch gekennzeichnet, daß als Betätigungseinrichtung ein motorischer Antrieb vorgesehen ist, der zwischen einem Antriebsmotor und der Kolbenstange (13) od. dgl. ein Getriebe mit einer von einem Kurbeltrieb angetriebenen Schwinge hat, an der mit vorzugsweise veränderbarem Abstand zur Schwingenlagerung ein Abtriebshebel od. dgl. angreift.

- Zusammenfassung -

0221369

Fig.1

Fig.2